# EUROPÄISCHE PATENTSCHRIFT

(11) **EP 2 399 004 B1**
(45) Veröffentlichungstag und Bekanntmachung des Hinweises auf die Patenterteilung: **04.03.2015**
(21) Anmeldenummer: 10702853.2
(22) Anmeldetag: 27.01.2010
(51) Int. Cl.: F01D 5/32, F01D 5/08, F01D 5/30

(54) **ROTORABSCHNITT FÜR EINEN ROTOR EINER TURBOMASCHINE, LAUFSCHAUFEL FÜR EINE TURBOMASCHINE UND BLOCKIERELEMENT**
ROTOR SECTION FOR A ROTOR OF A TURBO MACHINE, ROTOR BLADE FOR A TURBO MACHINE AND BLOCKING ELEMENT
SECTION DE ROTOR POUR UN ROTOR D'UNE TURBOMACHINE, AUBE ROTORIQUE POUR UNE TURBOMACHINE ET ÉLÉMENT DE BLOCAGE

(30) Priorität: 17.02.2009 EP 09002223
(43) Veröffentlichungstag der Anmeldung: 28.12.2011
(60) Teilanmeldung: 11008610.5
(73) Patentinhaber: Siemens Aktiengesellschaft, 80333 München (DE)
(72) Erfinder: AHAUS, Guido, 45133 Essen (DE); BUSCHMANN, Axel, 45355 Essen (DE); DUNGS, Sascha, 46485 Wesel (DE); HOELL, Harald, 63607 Wächtersbach (DE); KOLK, Karsten, 45479 Mülheim a.d. Ruhr (DE); MILAZAR, Mirko, 46049 Oberhausen (DE); SCHRÖDER, Peter, 45307 Essen (DE); VEITSMAN, Vyacheslav, 45879 Gelsenkirchen (DE)
(86) Internationale Anmeldenummer: PCT/EP2010/050934
(87) Internationale Veröffentlichungsnummer: WO 2010/094539

(56) Entgegenhaltungen:
- EP-A- 1 944 471
- EP-A- 1 944 472
- EP-A- 1 978 211
- DE-A1- 1 963 364
- FR-A- 2 524 933

## Beschreibung

Die Erfindung betrifft einen Rotorabschnitt gemäß dem Oberbegriff des Anspruchs 1. Die Erfindung betrifft des Weiteren eine Laufschaufel gemäß dem Oberbegriff des Anspruchs 9.

Ein gattungsgemäßer axialer Rotorabschnitt für eine Turbine bzw. ein Turbinenrotor ist beispielsweise aus der Offenlegungsschrift DE 1 963 364 bekannt. Der eine Rotorscheibe umfassende Rotorabschnitt weist an seinem Außenumfang mehrere in Axialrichtung verlaufende Haltenuten für Laufschaufeln der Turbine auf. Stirnseitig an der Rotorscheibe ist dabei eine endlos umlaufende Aufnahmenut für Dichtbleche vorgesehen. An einer Seitenwand der Aufnahmenut sind mehrere in Umfangsrichtung gleichmäßig verteilte Vorsprünge vorgesehen, die den Nutgrund der Aufnahmenut teilweise überdecken. In der Aufnahmenut sitzen plattenförmige Dichtbleche, welche an ihrer radial innen angeordneten Innenkante eine beidseitige Aufdickung aufweist, deren Breite annähernd der Nutbreite der Aufnahmenut entspricht. Die Aufdickung ist dabei in Umfangsrichtung betrachtet, abschnittsweise von Ausnehmungen unterbrochen, welche zu den Vorsprüngen der Aufnahmenut korrespondierend breit ausgebildet sind. Hierdurch lässt sich das Dichtblech durch eine rein radiale Bewegung von Außen in die Aufnahmenut einsetzen und nach einer Verschiebung in Umfangsrichtung, deren Verschiebeweg ungefähr der Breite des Vorsprungs entspricht, mit diesem verhaken. Die Aufdickung des Dichtbleches hintergreift dann die Vorsprünge der Aufnahmenut, so dass das Dichtblech sich nicht nach außen bewegen kann. Zur Montage aller Dichtbleche sind diese sukzessive in die Aufnahmenut einzusetzen und erst anschließend gemeinschaftlich in Umfangsrichtung zu verschieben. Hierdurch wird die Notwendigkeit eines Dichtblechschlosses vermieden. Nach dem Einsetzen der Dichtbleche und der Laufschaufeln werden die Außenkanten der Dichtbleche in plattformseitige Nuten der Laufschaufeln eingeschoben, so dass letztgenannte gegen eine Axialverschiebung gesichert sind. Zum Abschluss der Montage werden die Dichtbleche mittels einer Schraube in ihrer angehobenen Stellung fixiert. Jede Aufweitung liegt dann am Vorsprung an. Mittels dieser Anordnung der Bauteile kann ein erster Raum, welcher zwischen dem Dichtblech und der Stirnseite der Rotorscheibe liegt, gegenüber einem zweiten, andererseits des Dichtbleches liegenden Raum zur Führung unterschiedlicher Medien abgetrennt und abgedichtet werden. Zur Erreichung einer besonders guten Abdichtung liegt das Dichtblech mit seiner Aufweitung an derjenigen Seitenwand der Aufnahmenut an, an welcher kein Vorsprung vorgesehen ist. Außerdem sorgt eine innere, konisch verlaufende Kante des Vorsprungs dafür, dass das Dichtblech unter Fliehkrafteinfluss an die vorsprunglose Seitenwand der Aufnahmenut gepresst wird.

Ein Nachteil der bekannten Anordnung ist die aufwändige Konstruktion der Seitenflächen der Rotorscheibe und des Dichtbleches mit Vorsprüngen und Ausnehmungen. Ein weiterer Nachteil ist die Verwendung einer Schraube zur Sicherung der Dichtbleche gegen eine Verschiebung in Umfangsrichtung. Aufgrund der zwischen Betrieb und Stillstand auftretenden thermischen Wechselbeanspruchung und aufgrund des durch die Turbine strömenden Heißgases kann es zu Korrosions- und Festigkeitsproblemen in der Verschraubung kommen. Unter Umständen kann diese nicht bestimmungsgemäß gelöst werden. In diesem Fall wird die Schraube ausgebohrt, wobei dieser Vorgang in der Regel am noch in der unteren Gehäusehälfte der Gasturbine liegenden Rotor durchgeführt wird. Dabei kann es passieren, dass Späne in die untere Gehäusehälfte fallen, welche beim nachfolgenden Betrieb ungewollte Verunreinigungen herbeiführen können.

Ferner ist aus der FR 2 524 933 eine Sicherung für Laufschaufeln gegen eine Axialverschiebung bekannt, die mittels eines in Umfangsrichtung verschiebbaren Blechs gehalten werden. Die darin gezeigte Anordnung ist jedoch nicht geeignet, einen scheibennahen Raum gegenüber einem jenseits des Blechs vorhandenen Raum abzudichten.

Des Weiteren ist aus der Offenlegungsschrift DE 30 33 768 A1 eine Läuferbaugruppe einer Turbine bekannt, welche einen einstückigen Dichtring zur Axialsicherung von Laufschaufeln aufweist Der einstückige Dichtring der DE 30 33 768 A1 wird nach Art eines Bajonett-Verschlusses mit der Turbinenscheibe verhakt. Hierzu sind sowohl an der Turbinenscheibe als auch am Dichtring entlang des Umfang verteilte Vorsprünge und Ausnehmungen abwechseln angeordnet. Zur Montage wird der Dichtring an der Rotorscheibe angelegt, wobei die Ausnehmungen und Vorsprünge einander gegenüberliegen. Anschließend können diese durch eine geringfügige Verdrehung beider Teile gegeneinander miteinander verhakt werden. Aufgrund der integralen Bauform des Dichtrings kann dieser jedoch lediglich in Flugzeuggasturbinen verwendet werden, da deren Turbinen in Axialrichtung durch Stapeln zusammengesetzt werden. Stationäre Gasturbinen werden dagegen aus zwei Gehäusehälften zusammengesetzt, die den vollständig montierten Rotor umgreifen.

Die Aufgabe der Erfindung ist daher die Bereitstellung eines axialen Rotorabschnitts für eine stationäre Gasturbine und die Bereitstellung einer Laufschaufel einer Turbine, welche im Hinblick auf den Ein- und Ausbau von Dichtelementen weiter verbessert ist.

Die auf den Rotorabschnitt gerichtete Aufgabe wird durch einen gattungsgemäßen Rotorabschnitt mit den Merkmalen des Anspruchs 1 gelöst. Des Weiteren wird die auf die Laufschaufel gerichtete Aufgabe mit einer Laufschaufel gemäß Anspruch 8 gelöst.

Die Erfindung geht von der Erkenntnis aus, dass eine besonders zuverlässige Sicherung der Dichtelemente insbesondere dann möglich ist, wenn der Ort, an dem die Dichtelemente sich unter Fliehkraft am Rotor abstützen und derjenige Ort, an dem die einzelnen Dichtelemente gegen eine Verschiebung in Umfangsrichtung gesichert sind, möglichst nah aneinanderliegen. Mit anderen Worten: Der in Radialrichtung des Rotors vorhandene Abstand zwischen derjenigen Fläche des Rotors, an dem das Dichtelement unter Fliehkraft anliegt und der Ort der Sicherung des Dichtelements gegen eine Umfangsverschiebung sollten möglichst gering sein. Das bedeutet, dass sich an einer Anlagefläche einer Laufschaufel abstützende Dichtelemente gleichfalls an ihrem äußeren Bereich gegen eine Verschiebung in Umfangsrichtung gesichert sein sollten. Um dabei eine möglichst einfache Konstruktion für eine Umfangssicherung anzugeben, ist ein bolzenförmiges Blockierelement vorgesehen. Das Blockierelement sitzt einerseits in einer Öffnung, welche im Dichtelement vorgesehen ist. Andererseits sitzt das bolzenförmige Blockierelement in einem Loch, welches in der Stirnfläche eines Laufschaufelfußes angeordnet ist. Die Öffnung im Dichtelement ist dabei vergleichsweise nah an derjenigen Kante des Dichtelements, welche an der Anlagefläche des Rotors anliegt. Die Anlagefläche kann vorzugsweise ein Teil einer Unterseite einer Plattform der Laufschaufel sein. Aufgrund des unter Fliehkrafteinwirkung fest anliegenden Dichtelements an der Anlagefläche treten zwischen Dichtelement und Laufschaufelfuß wenn überhaupt, nur geringfügige Relativbewegungen auf. Die Umfangsfixierung des Dichtelementes erfolgt demnach an derjenigen Komponente, an der das Dichtelement sich im Betrieb abstützt und welches somit die Position und Bewegung des Dichtelementes mitbestimmt. Mit Hilfe einer derartigen Anordnung kann ein Verschleiß an der Anlagefläche, am Dichtelement und am Blockierelement sicher vermieden werden.

Die bezogen auf den Rotor radiale Positionierung des Blockierelements wurde folglich so gewählt, dass dessen Lage in einem relativ zur Laufschaufel bewegungsneutralem Bereich angesiedelt ist, so dass eine Kompensierung der betriebsbedingten Bewegungen im Fixierpunkt des Blockierelements nicht erforderlich ist. Durch die Verwendung eines bolzenartigen Blockierelements kann eine Nachgiebigkeit der Fixierung verhindert werden.

Am Rotorabschnitt wird zwischen Dichtelement und Stirnseite der Rotorscheibe ein Kühlmittel geführt, welches zur Kühlung der Rotorscheibe und der Laufschaufel vorgesehen ist. Die mit der Erfindung vorgeschlagene Anordnung führt zur Minimierung von Leckagen an Kühlmittel, da durch die Verwendung einer runden Öffnung im Dichtelement und des darin spielfrei eingesetzten Blockierbolzens eine vergleichsweise kurze Leckagestrecke bzw. eine Leckagefläche geringen Ausmaßes erreicht wird. Durch die Senkung von als Leckage verlorener Kühlmittelmenge kann prinzipiell eine Wirkungsgradsteigerung der Turbine erreicht werden.

An einer erfindungsgemäßen Laufschaufel, welche zumindest einen Schaufelfuß, eine Plattform und ein gekrümmtes Schaufelblatt umfasst, ist ein sich über den Schaufelfuß auskragender Vorsprung vorhanden, wobei an der dem Schaufelfuß zugewandten Unterseite des Vorsprungs eine dem Schaufelfuß zugewandte Anlagefläche für das blechförmiges Dichtelement vorgesehen ist. Um einen vergleichsweise geringen Abstand zwischen der Anlagefläche für das Dichtelement und einer Vorrichtung zur Verriegelung des Dichtelements gegen eine Bewegung in Umfangsrichtung zu erreichen, ist ein Sackloch zur Aufnahme des Blockierelements in der Stirnseite des Schaufelfußes vorgesehen, welches unmittelbar benachbart zum Vorsprung angesiedelt ist. Hiermit lassen sich zum Rotorabschnitt_analoge Vorteile erzielen.

Die Öffnung im Dichtelement ist schlüssellochartig und das Blockierelement bolzenartig mit einem an seinem Außenumfang angeordneten Nocken ausgebildet. Durch die schlüssellochartige Öffnung kann der Bolzen samt Nocken durch die Öffnung des Dichtelements durchgesteckt werden, wonach das Blockierelement um seine Längsachse gedreht wird, um den Nocken in einen Spalt zwischen dem Schaufelfuß und dem Dichtelement spielfrei einzudrehen.

Um eine spielfreie Befestigung des Dichtelements zu erzielen, weist das bolzenartige Blockierelement an seinem Außenumfang einen Nocken auf. Der Nocken sitzt spielfrei zwischen einander unmittelbar gegenüberliegenden Seitenwänden des Dichtelements und des Laufschaufelfußes. Hierdurch kann ein hämmernder Verschleiß am äußeren Dichtelementrand vermieden werden.

Vorteilhafte Ausgestaltungen sind in den Unteransprüchen angegeben.

Vorzugsweise ist das Loch vergleichsweise nahe, d. h. radial gesehen, unmittelbar unterhalb der Anlagefläche angeordnet. Korrespondierend dazu ist die Öffnung des Dichtelements, in dem der Bolzen zur Verriegelung gleichfalls sitzt, ebenfalls vergleichsweise nahe an demjenigen Rand des Dichtelements angeordnet, welcher an der Anlagefläche der Laufschaufel anliegt.

Insbesondere hierdurch ergibt sich eine Positionierung des bolzenartigen Blockierelements in einem relativ zur Laufschaufelbewegung neutralen Bereich.

Um das Blockierelement selber gegen eine Verdrehung und somit gegen Verlust aus dem Rotorabschnitt zu sichern, weist dieses stirnseitig eine Zinne auf, welche in eine Bartöffnung der schlüssellochartigen Öffnung einbiegbar ist. Hierdurch wird ein Formschluss zwischen Zinne und Bartöffnung hergestellt, welcher nach dem Verbiegen der Zinne das Blockierelement gegen eine ungewünschte Verdrehung innerhalb des Loches und innerhalb der Öffnung zuverlässig sichert. Ein nicht beabsichtigter Verlust des Blockierelements kann somit vermieden werden.

Vorzugsweise ist die Zinne Teil eines stirnseitigen Kranzes des Blockierelements, wodurch dieser vergleichsweise einfach und kostengünstig herstellbar ist. Um die Zinne schlussendlich herzustellen, sind in den umlaufenden Kranz zwei Schlitze vorgesehen, zwischen denen die Zinne angeordnet ist.

In einer alternativen vorteilhaften Ausgestaltung der Erfindung kann das Blockierelement mittels eines Z-förmigen Blechstreifens gegen Verlust gesichert sein. Hierzu ist das Blockierelement entlang seiner Längserstreckung abgeflacht. Der vor der Montage noch L-förmige Blechstreifen wird hierzu durch die Öffnung eingesetzt und mit seinem abgewinkeltem Schenkel zwischen Dichtelement und Laufschaufelfuß platziert, wonach das bolzenförmige abgeflachte Blockierelement sonach in Öffnung und Sackloch eingesteckt wird. Anschließend wird der bis dato L-förmige Blechstreifen durch Umbiegen in seine Z-Form gebracht, wobei dieser dann das Blockierelement gegen Verlust sichert.

Eine besonders einfache Demontage des Blockierelements erreicht werden, wenn - nachdem die Sicherung gegen den Verlust des Blockierelements entfernt worden ist - letztgenanntes eine stirnseitige Öffnung zur Demontage aufweist. In der Öffnung kann beispielsweise ein Gewinde vorgesehen sein, in dem ein Mittel zum Herausziehen des Blockierelements aus Öffnung und Loch eingeschraubt werden kann. Dieses Merkmal ermöglicht eine besonders einfache und schnelle Demontage des Blockierelements.

Vorzugsweise bilden alle Dichtelemente in Umfangsrichtung aneinander liegend einen Dichtring, so dass zwischen Dichtring und Stirnseite des Schaufelfußes bzw. Stirnseite der Rotorscheibe nahezu verlustfrei ein Kühlmittel entlang strömbar ist. Die Dichtelemente können dabei auch geringfügig überlappen.

Hierdurch kann eine besonders effiziente Führung von Kühlmittel entlang der Stirnseite des Schaufelfußes resp. Rotorscheibe ermöglicht werden.

Wenn das Loch als Sackloch ausgebildet ist, kann dieses vergleichsweise einfach hergestellt werden.

Gemäß einer weiteren Ausgestaltung ist die Anlagefläche an der Unterseite des Vorsprungs der Laufschaufel zumindest teilweise als Nutgrund einer zum Schaufelfuß hin geöffneten Nut ausgebildet. Dies verhindert ein Verrutschen des Dichtelements in axialer Richtung des Turbinenrotors.

Insgesamt wird mit der Erfindung eine simple und einfach auslegbare Konstruktion für die Umfangsfixierung von Dichtelementen angegeben, wobei vorzugsweise jedes Dichtelement durch jeweils ein Blockierelement gesichert ist. Das Blockierelement mit entsprechend angefertigtem Nocken kann wie ein Schlüssel in eine passende Öffnung im Dichtelement eingesetzt und nach Erreichung der axialen Endposition um 180° gedreht werden, so dass der Nocken die axiale Fixierung des Blockierbolzens sicherstellt (Schlüsselprinzip). Dabei ragt das Blockierelement mit seinem entsprechenden Ende in das passend dimensionierte Loch im zugehörigen Laufschaufelfuß, so dass eine Verschiebung des Dichtelements in Umfangsrichtung verhindert ist. Die Sicherung des Blockierbolzens gegen ein ungewolltes Drehen und Lösen aus der Öffnung und dem Sackloch erfolgt durch eine entsprechende Verformung der stirnseitig am Bolzen angeordneten Zinne in die aufgrund des Nockens erforderliche Bartöffnung der Öffnung, so dass ein Verdrehen des Fixierbolzens ausgeschlossen werden kann. Zur Demontage ist die Zinne durch den Einsatz eines passenden Treiber-Werkzeugs aus der Bartöffnung herauszuhebeln. Anschließend kann das Blockierelement um 180° gedreht und herausgezogen werden.

Die von der Erfindung beschriebene Konstruktion weist dabei eine hohe Robustzeit auf, da diese so ausgeführt werden kann, dass auch bei konservativer Berücksichtigung der Randbedingungen die vollen Umfangskräfte der Dichtelemente zuverlässig übertragen werden können. Eine Nachgiebigkeit der Fixierung ist nicht erforderlich. Zudem sind keine aufwändig gefertigten Nuten/Taschen zur Aufnahme eines eingebogenen Sicherungsblechs erforderlich, wodurch die Anordnung vergleichsweise kostengünstig ist.

Weitere Vorteile und weitere Merkmale ergeben sich aus der nachfolgenden Figurenbeschreibung. Es zeigen:
- FIG 1: eine teilperspektivische Schnittansicht eines Rotorabschnitts,
- FIG 2: den Ausschnitt A gemäß FIG 1 im Detail,
- FIG 3: eine im Dichtelement angeordnete Öffnung zur Aufnahme eines Blockierelements,
- FIG 4, 5: das Blockierelement in perspektivischen Ansichten,
- FIG 6: die perspektivische Ansicht eines Teils einer Laufschaufel für eine Turbomaschine,
- FIG 7: die Draufsicht auf eine Rotoranordnung gemäß einer alternativen Ausgestaltung,
- FIG 8: die alternative Ausgestaltung der Sicherung eines Blockierelements gegen eine axiale Verschiebung und
- FIG 9: ein weiteres Blockierelement in perspektivischer Darstellung.

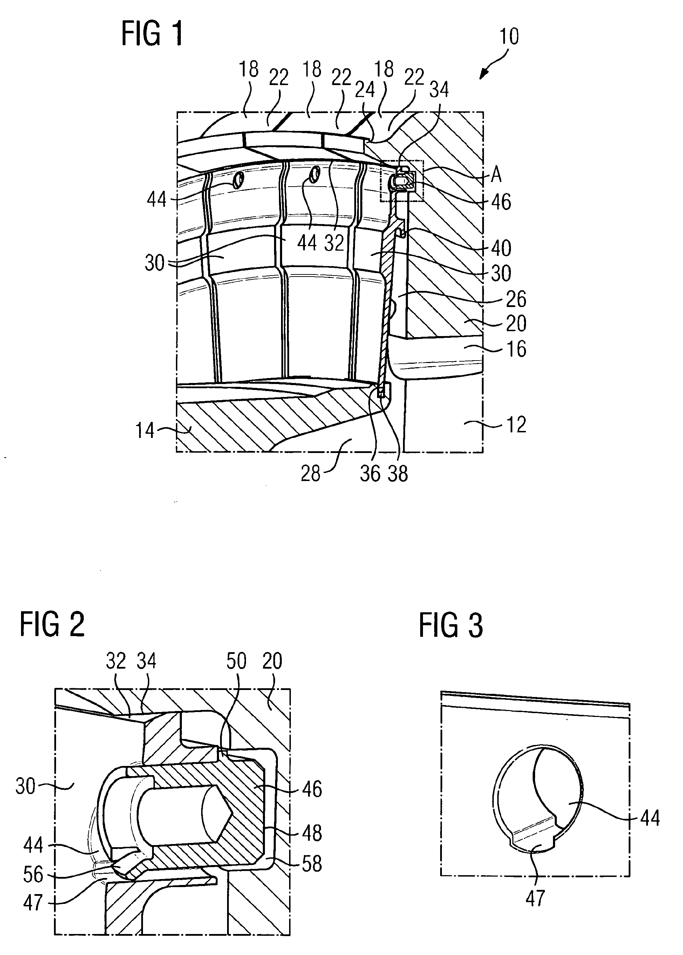

FIG 1 zeigt in teils perspektivischer, teils geschnittener Ansicht einen Rotorabschnitt 10 für den Rotor einer nicht weiter dargestellten Turbomaschine, welche als Gasturbine ausgebildet sein kann. Der Rotorabschnitt umfasst einerseits im Wesentlichen eine erste Rotorscheibe 12 und dazu eine benachbarte weitere Rotorscheibe 14. Die Rotorscheiben 12, 14 sind mittels einer nicht gezeigten Hirth-Verzahnung zur Übertragung von Drehmomenten formschlüssig miteinander verbunden und über einen nicht weiter dargestellten Zuganker miteinander verspannt. Der Rotorabschnitt 10 könnte alternativ zur gezeigten Darstellung auch aus einem einzigen Stück in Form eines Monoblocks oder aus einer einzigen Rotorscheibe gebildet sein. Am Außenumfang des Rotorabschnitts 10 sind mehrere, sich jeweils zumindest teilweise in Axialrichtung des Rotors erstreckende Laufschaufelhaltenuten 16 vorgesehen, von denen lediglich eine im Schnitt dargestellt ist. Die Laufschaufelhaltenut 16 weist eine tannenbaumförmige Kontur auf. In die Laufschaufelhaltenuten 16 ist jeweils eine Laufschaufel 18 eingesetzt, von denen die in FIG 1 am weitesten rechts dargestellte im Schnitt zu sehen ist. Die Laufschaufel 18 umfasst einen Schaufelfuß 20, der zumindest teilweise korrespondierend zur Kontur der Laufschaufelhaltenut 16 ausgebildet ist, um von dieser in Radialrichtung formschlüssig gehalten zu sein. Die Laufschaufel 18 umfasst eine Plattform 22 an der ein nicht weiter dargestelltes Schaufelblatt angeordnet ist. Die Plattform 22 weist gemäß dem Schnitt gemäß FIG 1 eine nach innen gekrümmte äußere Kontur auf, an deren Ende eine nach außen stehende Dichtspitze 24 vorgesehen ist. Insofern formt die in FIG 1 dargestellte Plattform 22 gleichfalls einen über die Stirnseite 26 des Schaufelfußes 20 vorspringenden Dichtflügel, welcher im Stand der Technik auch als "Angel "Wing" bekannt ist.

Eine Stirnseite 26 des Schaufelfußes 20 fluchtet mit einer Stirnseite 28 der Rotorscheibe 12. Für jede Laufschaufeln ist stirnseitig an der Rotorscheibe 12 jeweils ein Dichtelement 30. vorgesehen. Die Dichtelemente 30 liegen unter Fliehkrafteinwirkung mit ihrem äußeren Rand 32 an einer Anlagefläche 34 an, welche Anlagefläche 34 an der Unterseite der Plattform 22 bzw. des über den Schaufelfuß 20 stirnseitig auskragenden Vorsprungs angeordnet ist. Die Anlagefläche 34 weist demnach nach innen. Die Anlagefläche 34 könnte alternativ auch als Nutgrund einer plattenformunterseitig angeordneten Nut ausgebildet sein. Die Dichtelemente 30 sind blechartig bzw. plattenförmig ausgebildet und umfassen des Weiteren einen inneren Rand 36, welcher in einer nach außen geöffnete Ringnut 38 sitzt. Die Dichtelemente 30 weisen dabei in ihrem äußeren Drittel an der zur Rotorscheibe 12 zugewandten Fläche einen nach innen gerichteten Haken 40 auf, welcher in nicht dargestellter Weise mit einem stirnseitig 28 an der Rotorscheibe 12 angeordneten Haken in Eingriff steht. Durch die Verhakung der Dichtelemente 30 mit der Rotorscheibe 12 wird eine Verschiebung der Laufschaufeln 18 entlang der Laufschaufelhaltenut 16 sicher vermieden, so dass die Dichtelemente 30 die Axialsicherung der jeweils betreffenden Laufschaufel 18 bewirkt. Gleichfalls dienen die Dichtelemente 30 zur Führung von einem Kühlmittel, vorzugsweise Kühlluft, entlang der Stirnseite 28 der Rotorscheibe 12 und Stirnseite 26 des Schaufelfußes 20.

Um die Verschiebung der Dichtelemente 30 in Umfangsrichtung zu verhindern, ist im Bereich des äußeren Rands 32 der Dichtelemente 30 jeweils eine Öffnung 44 vorgesehen. Die Öffnung 44, ein darin sitzendes Blockierelement 46 sowie ein Teil des Schaufelfußes 20 sind in Detail in FIG 2 dargestellt. FIG 3 zeigt die Öffnung 44 in einer perspektivischen Ansicht. Die Öffnung 44 ist schlüssellochartig ausgebildet mit einem kreisrunden Öffnungsteil, an dem sich, in FIG 3 nach unten eine vergleichsweise kurze und eine vergleichsweise breite Bartöffnung 47 anschließt.

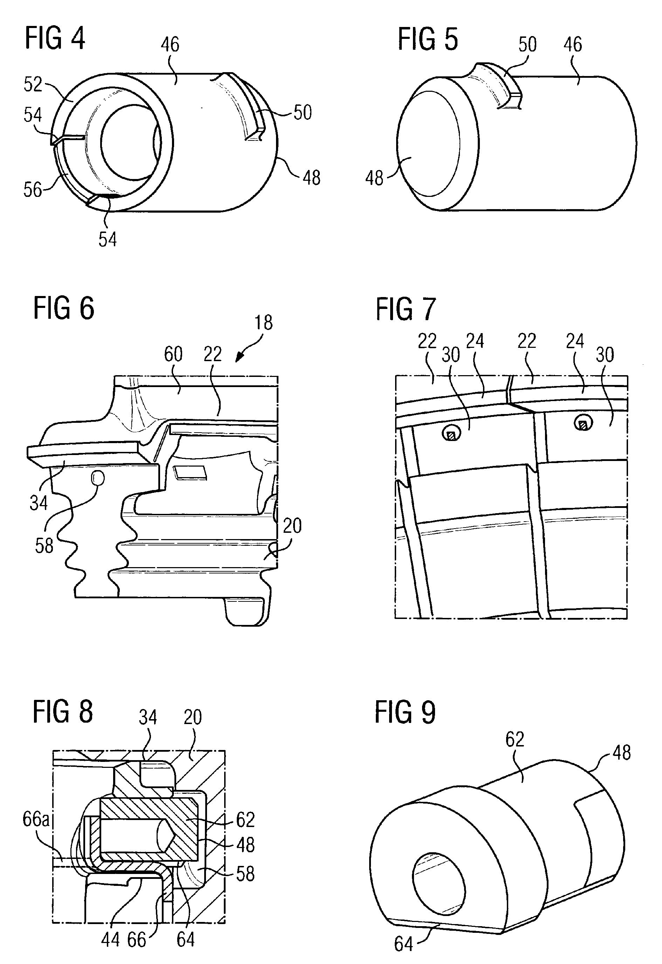

Das in FIG 4 und in FIG 5 perspektivisch dargestellte Blockierelement 46 weist an seinem Außenumfang einen Nocken 50 auf. Der Nocken 50 ist eher endseitig, d.h. an einem stirnseitigen ersten Ende 48 des Blockierelements 46 vorgesehen und erstreckt sich entlang des Umfangs über eine Winkellänge von ca. 20°. Die Winkellänge des Nockens 50 entspricht dabei der Breite der Bartöffnung 47, so dass das Blockierelement 46 durch die Öffnung 44 in das Dichtelement 30 eingesetzt werden kann. Das Blockierelement 46 weist zudem an seinem zweiten stirnseitigen Ende einen Kranz 52 auf, in dem zwei Schlitze 54 vorgesehen sind, so dass sich ein Teil des Kranzes 52 als Zinne 56 oder Zahn ausbildet. Die Schlitze 54 sind dabei an demjenigen Teil des Umfangs angeordnet, welcher den Enden des Nockens 50 gegenüberliegt. Insofern sind die Zinne 56 und der Nocken zumindest annähernd gleich breit. Das freie Ende der Zinne 56 ist dabei spitz ausgeführt, um die Demontage zu vereinfachen.

Das Blockierelement 46 ist in FIG 2 in seiner endgültigen Position gezeigt. Zur Montage des Blockierelements 46 in der Öffnung 44 ist erstgenanntes so auszurichten, dass der Nocken 50 durch die Bartöffnung 47 einsetzbar ist. Nach dem Einsetzen des Blockierelements 46 in der Öffnung 44 wird dieses um seine Längsachse um 180° gedreht, bis die an seinem zweiten Ende angeordnete Zinne 56 im Bereich der Bartöffnung 47 ist. Mit einem geeigneten Werkzeug kann die Zinne 56 in die Bartöffnung 47 eingebogen werden, so dass dadurch das Blockierelement 46 gegen eine Verdrehung gesichert ist. Nach dem Einsetzen des Blockierelements 46 ragt dessen am Nocken 50 vorgesehene Ende 48 in ein Loch 58 ein, welches an der Stirnseite 26 des Schaufelfußes 20 angeordnet ist. Das Loch 58 ist dabei als Sackloch ausgebildet, in welchem das Ende 48 des Blockierelements 46 spielbehaftet sitzt.

Der Nocken 50 greift passend in einen axialen Spalt ein, welcher zwischen der Stirnseite 26 des Schaufelfußes 20 und dem Dichtelement 30 vorhanden ist. Hierzu ist im Bereich der Öffnung 44 das Dichtelement 30 hülsenartig ausgebildet.

Zur Demontage der Laufschaufel 18 ist die Zinne 56 aufzubiegen, wodurch der Formschluss mit der Bartöffnung 47 gelöst wird. Hiernach kann das Blockierelement 46 um 180° gedreht werden, so dass der Nocken 50 sich im Bereich der Bartöffnung 47 befindet. Anschließend kann mit einem geeigneten Werkzeug das Blockierelement 46 der Öffnung 44 entnommen werden, wonach anschließend das Dichtelement 30 in Umfangsrichtung verschoben werden kann. Durch die Verschiebung des Dichtelements 30 in Umfangsrichtung kann die Verhakung des Dichtelements mit der Rotorscheibe gelöst werden, sonach dieses dem Rotorabschnitt 10 entnehmbar ist. Anschließend kann die Laufschaufel 18 durch axiales Verschieben entlang der Haltenut 16 dem Rotorabschnitt 10 entnommen werden.

Das im Laufschaufelfuß 20 angeordnete Sackloch 58 ist dabei vergleichsweise nah an der Anlagefläche 34 angeordnet.

FIG 6 zeigt die Turbinenschaufel 18 in einer perspektivischen Darstellung, wobei das Schaufelblatt 60 der Turbinenschaufel 18 jedoch nur plattformnah dargestellt ist. Aus FIG 6 geht klar hervor, dass das Sackloch vergleichsweise nah, d.h. unmittelbar benachbart zur Anlagefläche 34 angeordnet ist. Demnach sind Anlagefläche 34 für das Dichtelement 30 und dessen Mittel zur Verhinderung einer Bewegung in Umfangsrichtung vergleichsweise nah beieinander angeordnet. Durch die örtliche Nähe beider funktionalen Mittel kann eine besonders sichere und zuverlässige Verschiebesicherung angegeben werden, die zudem besonders verschleißfrei ist, da nahezu keine reibenden Relativbewegungen entstehen.

FIG 7 zeigt die zueinander in Umfangsrichtung benachbarten Dichtelemente 30, die vor deren Sicherung durch das Blockierelement zueinander beweglich sind, um die Montage eines an sich geschlossenen Dichtrings zu ermöglichen. Hierzu weisen die Kanten der Dichtelemente, welche zu einem benachbarten Dichtelement weisen, jeweils nur die halbe Materialstärke der Dichtelementwand auf, so dass die Dichtelemente in diesen Bereichen überlappend ausgebildet sind. Anstelle einer einfachen Überlappung kann auch eine Nut- und Federüberlappung vorgesehen sein.

Die in FIG 7 gezeigte alternative Ausgestaltung der Umfangssicherung unterscheidet sich von dem in den Figuren 1 bis 6 dargestellten hinsichtlich des weiteren Blockierelements 62 und dessen Sicherung gegen Verlust aus der Öffnung 44 und aus dem Loch 58. Das in FIG 7 dargestellte weitere Blockierelement 62 ist perspektivisch in FIG 9 dargestellt. Das weitere Blockierelement 62 gemäß der alternativen Ausgestaltung ist gleichfalls bolzenartig ausgebildet mit zwei unterschiedlichen Durchmessern. Entlang seiner Längserstreckung ist das Blockierelement 62 jedoch abgeflacht ausgebildet, so dass an der Abflachung 64 ein Sicherungsblech anliegen kann. Die Sicherung des Blockierelements 62 ist in FIG 8 dargestellt, wobei FIG 8 den gleichen Ausschnitt zeigt, wie der in FIG 2 dargestellte Ausschnitt A. Auch hier sind identische Bauteile mit gleichen Bezugszeichen versehen. Nach der Montage der Laufschaufel 18 in der Haltenut 16 und dem anschließenden Montieren des Dichtelements 30 wird in die Öffnung 44 ein zunächst L-förmiges Sicherungsblech 66a eingesetzt, dessen kürzerer Schenkel in einen Spalt zwischen Stirnseite 26 des Schaufelfußes 20 und Dichtelement (30) eingreift. Anschließend wird das Blockierelement 62 mit seiner mit seiner Abflachung 64 auf das Sicherungsblech 66 gelegt. Danach wird das Blockierelement 62 in die Öffnung 44 eingeschoben, bis es mit seinem Ende 48 in das Sackloch 58 eingreift. Sonach kann mit einem geeigneten Mittel das bis dahin im Querschnitt gesehenen L-förmige Sicherungsblech 66a umgebogen werden, so dass dieses im Querschnitt Z-förmig ist. Durch die Z-Form des Sicherungsblechs 66 blockiert dieses eine axiale Verschiebung des Blockierelements 62. Hierdurch kann sich die Verriegelung des Dichtelementes 30 in Umfangsrichtung nicht ungewollt lösen.

Insgesamt betrifft die Erfindung einen Rotorabschnitt 10 für einen Rotor einer Gasturbine, eine Laufschaufel 18 und ein Blockierelement 46, 62. Der Rotorabschnitt 10 umfasst eine Rotorscheibe 12 mit daran in Haltenuten 16 eingesetzte Laufschaufeln 18, die mittels eines stirnseitig angeordneten Dichtelements 30 gegen eine Verschiebung entlang der Haltenuten 16 gesichtert sind. Um eine zuverlässige simple und einfach auslegbare Konstruktion für die Umfangsfixierung der Dichtelemente 30 angegeben, schlägt die Erfindung vor, dass jedes Dichtelement 30 durch jeweils ein Blockierelement 46, 62 gesichert ist, welches dabei in ein im Laufschaufelfuß 20 stirnseitig angeordnetes Loch 58 eingreift.

## Patentansprüche

1. Rotorabschnitt (10) für den Rotor einer Turbomaschine, an dessen Außenumfang sich in Axialrichtung des Rotors erstreckende Laufschaufelhaltenuten (16) vorgesehen sind, in denen jeweils eine Laufschaufel (18) mit zur Laufschaufelhaltenut (16) korrespondierendem Schaufelfuß (20) angeordnet ist,
mit jeweils an den Laufschaufeln (18) vorgesehenen, radial nach innen weisenden Anlageflächen (34),
wobei zur Führung eines Kühlmittels entlang der stirnseitigen Rotorfläche (28) blechförmige Dichtelemente (30) unter Fliehkrafteinwirkung an der Anlagefläche (34) anliegen und wobei zur Sicherung der Dichtelemente (30) gegen eine Verschiebung in Umfangsrichtung mindestens eines der Dichtelemente (30) eine im Dichtelement (30) vorgesehene Öffnung (44) zur Aufnahme eines Blockierelements (46, 62) aufweist und
wobei ein mit der Öffnung (44) fluchtendes Loch (58) und ein im Loch (58) und in der Öffnung (44) sitzendes lagegesichertes Blockierelement (46, 62) vorgesehen ist,
das Loch (58) im Schaufelfuß (20) angeordnet ist **dadurch gekennzeichnet dass**, dass die Öffnung (44) schlüssellochartig und bei der das Blockierelement (46) bolzenartig mit einem an seinem Außenumfang angeordneten Nocken (50) ausgebildet ist, welcher Nocken (50) zwischen dem Schaufelfuß (20) und dem Dichtelement (30) eindrehbar ist.

2. Rotorabschnitt (10) nach Anspruch 1,
bei der jeweils das Loch (58) näher an der radial nach innen weisenden Anlagefläche (34) angeordnet ist und die Öffnung (44) näher an demjenigen Rand (32) des Dichtelements (30) angeordnet ist, welcher an der Anlagefläche (34) der Laufschaufel (18) anliegt, als an einem einen inneren Rand (36) des Dichtelements (30).

3. Rotorabschnitt (10) nach Anspruch 1 oder 2,
bei dem das Blockierelement (46) stirnseitig eine Zinne (56) aufweist, welche in eine Bartöffnung (47) der schlüssellochartigen Öffnung (44) einbiegbar ist.

4. Rotorabschnitt (10) nach Anspruch 3,
bei dem die Zinne (56) Teil eines stirnseitigen Kranzes (52) des Blockierelements (46) ist.

5. Rotorabschnitt (10) nach Anspruch 1,
bei dem das Blockierelement (62) mittels eines Z-förmigen Sicherungsblechs (66) gegen Verlust gesichert ist, dessen erstes Ende zwischen Dichtelement (30) und Stirnseite (26) des Schaufelfußes (20) anliegt.

6. Rotorabschnitt (10) nach einem der vorangehenden Ansprüche,
bei dem das Blockierelement (46, 62) eine stirnseitige Öffnung zur Demontage aufweist.

7. Rotorabschnitt (10) nach einem der vorangehenden Ansprüche,
bei dem die Dichtelemente (30) in Umfangsrichtung aneinanderliegend einen in einer Ringnut (38) sitzenden Dichtring bilden, welche Ringnut (38) an einer Umfangsfläche vorgesehen ist, welche an einer stirnseitigen Seitenfläche des Rotors angeordnet ist.

8. Laufschaufel (18) für eine Turbomaschine,
mit einem hammer- oder tannenbaumförmigen Schaufelfuß (20), an dem sich eine Plattform (22) und daran ein sich aerodynamisch gekrümmtes Schaufelblatt (60) anschließt und
mit einem über den Schaufelfuß (20) auskragenden Vorsprung, wobei an der dem Schaufelfuß (20) zugewandten Unterseite des Vorsprungs eine dem Schaufelfuß (20) zugewandte Anlagefläche (34) für ein blechförmiges Dichtelement (30) vorgesehen ist,
**dadurch gekennzeichnet, dass**
unmittelbar benachbart zum Vorsprung ein als Sackloch ausgebildetes Loch (58) in der Stirnseite (26) des Schaufelfußes (20) zur Aufnahme eines Blockierelements (46, 62) vorgesehen ist.

9. Laufschaufel (18) nach Anspruch 8,
bei der das Loch (58) näher am Vorsprung als zu einer Unterseite des Schaufelfußes (20) angeordnet ist.

10. Laufschaufel (18) nach Anspruch 8, oder 9 ,
bei der die Anlagefläche (34) zumindest teilweise als Nutgrund einer zum Schaufelfuß (20) hin geöffneten Nut ausgebildet ist.

11. Laufschaufel (18) nach einem der Ansprüche 8 bis 10,
bei der der Vorsprung als Teil der Plattform (22) oder als Teil eines seitlich abstehenden Dichtungsflügels ausgebildet ist.

## Claims

1. Rotor section (10) for the rotor of a turbomachine, on the outer periphery of which provision is made for rotor blade retaining grooves (16) which extend in the axial direction of the rotor and in which a rotor blade (18) is arranged in each case, having a blade root (20) which corresponds to the rotor blade retaining groove (16), having radially inwardly pointing contact surfaces (34) which are provided in each case on the rotor blades (18), wherein for the guiding of a cooling medium along the rotor surface (28) on the end face, plate-like sealing elements (30) bear against the contact surface (34) by centrifugal force action and wherein for securing the sealing elements (30) against displacement in the circumferential direction at least one of the sealing elements (30) has an opening (44) provided in the sealing element (30) for accommodating a blocking element (46, 62)
and
wherein provision is made for a hole (58), which aligns with the opening (44), and for a positionally secured blocking element (46, 62), which fits in the hole (58) and in the opening (44),
the hole (58) is arranged in the blade root (20), **characterized in that** the opening (44) is of a keyhole-like design and wherein the blocking element (46) is of a bolt-like design with a cam (50) which is arranged on its outer circumference, which cam (50) can be rotated between the blade root (20) and the sealing element (30).

2. Rotor section (10) according to Claim 1,
in which the hole (58) is arranged in each case closer to the radially inwardly pointing contact surface (34) and the opening (44) is arranged closer to that edge (32) of the sealing element (30) which bears against the contact surface (34) of the rotor blade (18) than to an inner edge (36) of the sealing element (30).

3. Rotor section (10) according to Claim 1 or 2,
in which the blocking element (46) has a crenellation (56) on the end face, which can be bent into a bit recess (47) of the keyhole-like opening (44).

4. Rotor section (10) according to Claim 3,
in which the crenellation (56) is part of an end-face ring (52) of the blocking element (46).

5. Rotor section (10) according to Claim 1,
in which the blocking element (62) is secured against loss by means of a Z-shaped locking plate (66), the first end of which lies between sealing element (30) and end face (26) of the blade root (20).

6. Rotor section (10) according to one of the preceding claims,
in which the blocking element (46, 62) has an end-face opening for its removal.

7. Rotor section (10) according to one of the preceding claims,
in which the sealing elements (30), bearing against each other in the circumferential direction, form a sealing ring which fits in an annular groove (38), which annular groove (38) is provided on a circumferential surface which is arranged on an end-face side surface of the rotor.

8. Rotor blade (18) for a turbomachine,
having an inverted T-shaped or fir tree-shaped blade root (20), adjoining which are a platform (22) and an aerodynamically curved blade airfoil (60) thereupon, and having a projection which protrudes over the blade root (20), wherein on the underside of the projection facing the blade root (20) provision is made for a contact surface(34), facing the blade root (20), for a plate-like sealing element (30),
**characterized in that** provision is made directly adjacent to the projection for a hole (58), which is formed as a blind hole, in the end face (26) of the blade root (20) for accommodating a blocking element (46, 62).

9. Rotor blade (18) according to Claim 8,
in which the hole (58) is arranged closer to the projection than to an underside of the blade root (20).

10. Rotor blade (18) according to Claim 8 or 9,
in which the contact surface (34) is formed at least partially as the base of a groove which is open towards the blade root (20).

11. Rotor blade (18) according to one of Claims 8 to 10,
in which the projection is formed as part of the platform (22) or as part of a sideways projecting sealing wing.

## Revendications

1. Tronçon (10) de rotor pour le rotor d'une turbomachine, sur le pourtour extérieur duquel sont prévues des rainures (16) de retenue d'aubes mobiles, qui s'étendent dans la direction axiale du rotor et dans lesquelles est mise respectivement une aube (18) mobile par une emplanture (20) d'aube correspondant à la rainure (16) de retenue de l'aube mobile,
comprenant des surfaces (34) d'application prévues respectivement sur les aubes (18) mobiles et tournées radialement vers l'intérieur,
dans lequel, pour la conduite d'un fluide de refroidissement le long de la surface (28) du rotor du côté frontal, des éléments (30) d'étanchéité en forme de tôle s'appliquent sous l'effet de la force centrifuge à la surface (34) d'application et dans lequel, pour empêcher les éléments (30) d'étanchéité de se déplacer dans la direction périphérique, au moins l'un des éléments (30) d'étanchéité a, pour la réception d'un élément (46, 62) de blocage, une ouverture (44) prévue dans l'élément (30) d'étanchéité et dans lequel il est prévu un trou (58) aligné avec l'ouverture (44) et un élément (46, 62) de blocage fixé en position en étant assis dans le trou (58) et dans l'ouverture (44),
le trou (58) est disposé dans l'emplanture (20) de l'aube **caractérisé en ce que** l'ouverture (44) est constituée sous la forme d'un trou de serrure et l'élément (46) de blocage est constitué sous la forme d'un axe, ayant un bossage (50) disposé sur son pourtour extérieur, lequel bossage (50) peut entrer en tournant entre l'emplanture (20) de l'aube et l'élément (30) d'étanchéité.

2. Tronçon (10) de rotor suivant la revendication 1,
dans lequel le trou (58) est disposé plus près de la surface (34) d'application tournée radialement vers l'intérieur et l'ouverture (44) plus près du bord (32) de l'élément (30) d'étanchéité, qui s'applique à la surface (34) d'application de l'aube (18) mobile, qu'un bord (36) intérieur de l'élément (30) d'étanchéité.

3. Tronçon (10) de rotor suivant la revendication 1 ou 2,
dans lequel l'élément (46) de blocage a du côté frontal un créneau (56), qui peut entrer en se courbant dans une ouverture (47) de panneton de l'ouverture (44) de type en trou de serrure.

4. Tronçon (10) de rotor suivant la revendication 3,
dans lequel le créneau (56) fait partie d'une couronne (52) du côté frontal de l'élément (46) de blocage.

5. Tronçon (10) de rotor suivant la revendication 1,
dans lequel l'élément (62) de blocage est empêché de se perdre au moyen d'une tôle (66) de fixation en forme de Z, dont la première extrémité s'applique entre l'élément (30) d'étanchéité et le côté (26) frontal de l'emplanture (20) de l'aube.

6. Tronçon (10) de rotor suivant l'une des revendications précédentes,
dans lequel l'élément (46, 62) de blocage a une ouverture du côté frontal pour le démontage.

7. Tronçon (10) de rotor suivant l'une des revendications précédentes,
dans lequel les éléments (30) d'étanchéité, en s'appliquant l'un contre l'autre dans la direction périphérique, forment un anneau d'étanchéité mis dans une rainure (38) annulaire, laquelle rainure (38) annulaire est prévue sur une surface périphérique, qui est disposée sur une surface latérale du côté frontal du rotor.

8. Aube (18) mobile pour une turbomachine,
comprenant une emplanture (20) d'aube en forme de marteau ou en forme de sapin, à laquelle se raccorde une plateforme (22), et, à celle-ci, une lame (60) d'aube courbée aérodynamiquement et comprenant une saillie dépassant de l'emplanture (20) de l'aube, dans laquelle, sur le côté inférieur tourné vers l'emplanture (20) de l'aube de la saillie, est prévue une surface (34) d'application, tournée vers l'emplanture (20) de l'aube, pour un élément (30) d'étanchéité en forme de tôle,
**caractérisée en ce que**,
au voisinage immédiat de la saillie, est prévu, pour la réception d'un élément (46, 62) de blocage, un trou (58) constitué en trou borgne dans le côté (26) frontal de l'emplanture (20) de l'aube.

9. Aube (18) mobile suivant la revendication 8, dans laquelle le trou (58) est plus près de la saillie que d'un côté inférieur de l'emplanture (20) de l'aube.

10. Aube (18) mobile suivant la revendication 8 ou 9, dans laquelle la surface (34) d'application est constituée au moins en partie sous la forme d'un fond d'une rainure ouverte en direction de l'emplanture (20) de l'aube.

11. Aube (18) mobile suivant l'une des revendications 8 à 10, dans laquelle la saillie fait partie de la plateforme (22) ou fait partie d'une aile d'étanchéité en saillie latéralement.
